# EUROPEAN PATENT SPECIFICATION

(11) **EP 2 193 158 B1**
(45) Date of publication and mention of the grant of the patent: **14.09.2011**
(21) Application number: 08833144.2
(22) Date of filing: 26.09.2008
(51) Int. Cl.: C08G 73/02, C09D 5/00, C09D 5/08, C09D 179/02

(54) **POLYANILINE, METHOD FOR MANUFACTURING SAME, AND POLYANILINE-CONTAINING SOLUTION AND COATING MATERIAL**
POLYANILIN, VERFAHREN ZU SEINER HERSTELLUNG SOWIE POLYANILINHALTIGE LÖSUNG UND BESCHICHTUNGSMATERIAL
POLYANILINE, SON PROCÉDÉ DE FABRICATION ET SOLUTION CONTENANT UNE POLYANILINE ET MATÉRIAU DE REVÊTEMENT

(30) Priority: 27.09.2007 JP 2007252639
(43) Date of publication of application: 09.06.2010
(73) Proprietor: Toyota Jidosha Kabushiki Kaisha, Toyota-shi, Aichi-ken, 471-8571 (JP); Kuramoto, Noriyuki, Yamagata 992-8510 (JP)
(72) Inventor: KURAMOTO, Noriyuki, Yamagata 992-8510 (JP); MAEDA, Shigeyoshi, Tokyo-to 135-0021 (JP); TAKADA, Yu, Aichi-ken 471-8571 (JP); ISHII, Masahiko, Aichi-ken 471-8571 (JP)
(74) Representative: Winter, Brandl, Fürniss, Hübner, Röss, Kaiser, Polte - Partnerschaft
(86) International application number: PCT/IB2008/002511
(87) International publication number: WO 2009/040648

(56) References cited:
- WO-A-01/88047
- WO-A-2009/040626
- US-A- 4 400 365
- US-A- 5 585 040
- US-A- 5 853 621
- US-A- 6 054 514
- US-A1- 2004 005 464

## Description

### BACKGROUND OF THE INVENTION

### 1. Field of the Invention

The present invention relates to a method for manufacturing polyaniline.

### 2. Description of the Related Art

An antirust treatment is performed on a metal surface for corrosion prevention. Polyanilines have been studied an antirust agent. Where a polyaniline solution or coating material containing a polyaniline is coated on a metal, the metal surface is passivated. Therefore, metal corrosion may be inhibited.

A variety of antirust additives may be added to coating materials containing a polyaniline in order to improve further the antirust ability of the coating materials. Examples of antirust additives include chromium-free antirust pigments (zinc oxide, zinc phosphate, aluminum zinc phosphate) and inorganic oxides (silica, alumina, and the like). Dispersing and dissolving an elemental metal or a metal salt and then admixing to a coating material composition has been reported as a process aimed at the improvement of antirust ability of a nonconductive polyaniline (see, for example, PCT application publication No. WO01/088047).

A polyaniline contained in a coating film formed by a polyaniline solution or polyaniline-containing coating material is gradually degraded by H⁺, OH⁻ produced by corrosion reactions (anodic reaction, cathodic reaction) occurring on the metal surface, and the function of forming a passivation layer on the metal surface is lost. Even when an antirust additive is added to the polyaniline-containing coating material, the degradation of polyaniline is difficult to inhibit completely. Therefore, as polyaniline degrades, the passivation layer is destroyed, and metal corrosion proceeds.
In WO 01/88047 A1 a two-component curable paint composition is prepared by mixing at least one curable resin as a base component with a hardening component comprising a non-conductive polyaniline. Further additives like zinc phosphates may be added to the mixture of these resins.
US 6,054,514 is directed to corrosion inhibiting paint compositions. These compositions are prepared by mixing film forming polymers like polyamide resins with a corrosion inhibiting additive mixture comprising an organic sulfonic acid and butyrolactone. As a further additive an intrinsically conductive polymer like a polyaniline can be added to the mixture.
US 4,400,365 discloses a method for preparing aluminum zinc phosphat hydrates to be used as anti-corrosion pigments in paint compositions.
US 5,585,040 discloses electrically conductive polymer materials which contain a polyaniline doped with a protonic acid. The acidity of the conductive polymer is reduced by adding a neutralizing compound like carbonate or hydrogen carbonate salts.
US 5,853,621 is directed to a corrosion resistant paint comprising one or more polymeric binders dispersed in a liquid medium. The anti-corrosion effect of this paint is improved by adding one or more non-conductive conjugated polymers like polyanilines.
US 2004/0005464 A1 discloses an anticorrosive paint using polyaniline as an anticorrosion pigment. With such paint it is possible to avoid the use of metals as an anticorrosive pigment so that the environmental pollution can be reduced.
WO 2009/040626 A2 is directed to an antirust treated metal base material comprising a coating film. This coating film contains an insulating polyaniline which is in a highly oxidized state before the coating film is formed.

The following factors may be thought to advance corrosion of a metal surface having a coating film formed by a polyaniline-containing coating material including an antirust additive. When a typical polyaniline-containing coating material is prepared, the polyaniline and an antirust additive are prepared separately and then mixed. As a result, the polyaniline and antirust additive are randomly present in the coating film formed by the polyaniline-containing coating material. As a result, a local corrosion reaction easily occurs in zones where the antirust additive is not present, and metal corrosion may be supposed to advance from these zones.

### SUMMARY OF THE INVENTION

It is an object of the present invention to provide a method for manufacturing a polyaniline that has excellent antirust ability by using a metal phosphate as an antirust additive.

A method for manufacturing a polyaniline according to the first aspect of the present invention includes preparing an aniline mixed solution in which a metal phosphate as an antirust additive and at least one of aniline and aniline derivatives are mixed and polymerizing at least one of the aniline and the aniline derivatives by adding a polymerization initiator to the aniline mixed solution.

In the method for manufacturing a polyaniline of the above-described aspect, the aniline mixed solution may be prepared by adding the metal phosphate and at least one of the aniline and aniline derivatives to an organic solvent immiscible with water.

In the method for manufacturing a polyaniline of the above-described aspect, the aniline mixed solution may be prepared by adding a surfactant, water, and a water-soluble protonic acid to the organic solvent immiscible with water.

In the method for manufacturing a polyaniline doped with a metal phosphate according to the present invention the aniline mixed solution may be prepared by adding a surfactant, water, a water-soluble protonic acid, a metal phosphate, and at least one of aniline and aniline derivatives to an organic solvent immiscible with water.

In the method for manufacturing a polyaniline of the above-described aspect, the water-soluble protonic acid may be one of phosphoric acid, hydrochloric acid, sulfuric acid, and nitric acid.

In the method for manufacturing a polyaniline of the above-described aspect, the water-soluble protonic acid may be phosphoric acid.

In the method for manufacturing a polyaniline of the above-described aspect, the metal phosphate may be one of zinc phosphate, iron phosphate, and manganese phosphate.

In the method for manufacturing a polyaniline of the above-described aspect, the metal phosphate may be zinc phosphate.

In the method for manufacturing a polyaniline of the above-described aspect, the polymerization initiator may be one of ammonium persulfate, hydrogen peroxide, and ferric chloride.

In the method for manufacturing a polyaniline of the above-described aspect, the polymerization initiator may be ammonium persulfate.

In the method for manufacturing a polyaniline of the above-described aspect, the surfactant may be one of an anionic surfactant, a cationic surfactant, and a nonionic surfactant.

In the method for manufacturing a polyaniline of the above-described aspect, the organic solvent immiscible with water may have a solubility parameter of about 7 to 12.

In the method for manufacturing a polyaniline of the above-described aspect, the organic solvent immiscible with water may be one of benzene, toluene, chloroform, xylene, and ethyl acetate.

The present invention provides a method for manufacturing a polyaniline having excellent antirust ability.

### BRIEF DESCRIPTION OF THE DRAWINGS

The foregoing and/or further objects, features and advantages of the invention will become apparent from the following description of preferred embodiments with reference to the accompanying drawings, in which like numerals are used to represent like elements and wherein:
FIG. 1 shows measurement results relating to an alternating current impedance of Evaluation Sample 1;
FIG. 2 shows measurement results relating to an alternating current impedance of Evaluation Sample 2;
FIG. 3A shows observation results relating to an external appearance of the coating film of Evaluation Sample 1; these results represent the external appearance of the coating film that was allowed to stay for 30 minutes;
FIG. 3B shows observation results relating to an external appearance of the coating film of Evaluation Sample 1; these results represent the external appearance of the coating film that was allowed to stay for 7 days;
FIG. 3C shows observation results relating to an external appearance of the coating film of Evaluation Sample 1; these results represent the external appearance of the coating film that was allowed to stay for 14 days;
FIG. 3D shows observation results relating to an external appearance of the coating film of Evaluation Sample 1; these results represent the external appearance of the coating film that was allowed to stay for 21 days;
FIG 3E shows observation results relating to an external appearance of the coating film of Evaluation Sample 1; these results represent the external appearance of the coating film that was allowed to stay for 28 days;
FIG. 4A shows observation results relating to an external appearance of the coating film of Evaluation Sample 2; these results represent the external appearance of the coating film that was allowed to stay for 30 minutes;
FIG 4B shows observation results relating to an external appearance of the coating film of Evaluation Sample 2; these results represent the external appearance of the coating film that was allowed to stay for 7 days;
FIG. 4C shows observation results relating to an external appearance of the coating film of Evaluation Sample 2; these results represent the external appearance of the coating film that was allowed to stay for 14 days;
FIG. 4D shows observation results relating to an external appearance of the coating film of Evaluation Sample 2; these results represent the external appearance of the coating film that was allowed to stay for 21 days;
FIG 4E shows observation results relating to an external appearance of the coating film of Evaluation Sample 2; these results represent the external appearance of the coating film that was allowed to stay for 28 days;
FIG 5A shows evaluation results on adhesivity of Evaluation Sample 9;
FIG 5B shows evaluation results on adhesivity of Evaluation Sample 3;
FIG 5C shows evaluation results on adhesivity of Evaluation Sample 4;
FIG. 5D shows evaluation results on adhesivity of Evaluation Sample 5;
FIG 5E shows evaluation results on adhesivity of Evaluation Sample 6;
FIG 5F shows evaluation results on adhesivity of Evaluation Sample 7; and
FIG. 6 shows measurement results relating to polarization resistance values of Evaluation Sample 3 to Evaluation Sample 9.

### DETAILED DESCRIPTION OF EMBODIMENTS

A method for manufacturing polyaniline doped with a metal phosphate as an antirust additive a in accordance with embodiments of the present invention will be described hereinbelow in greater detail.

A method for manufacturing a polyaniline doped with a metal phosphate as an antirust additive in accordance with an embodiment of the present invention (which may be referred to hereinbelow simply as "polyaniline") includes a process of preparing an aniline mixed solution by mixing a surfactant, water, a water-soluble protonic acid, a metal phosphate, and at least one of aniline and aniline derivatives with an organic solvent immiscible with water (which may be referred to hereinbelow as "mixing process") and a process of adding a polymerization initiator to the aniline mixed solution and polymerizing at least one of the aniline and the aniline derivatives (which may be referred to hereinbelow as "polymerization process"). A polyaniline and polyaniline-containing solution are obtained by the method for manufacturing a polyaniline in accordance with the embodiment.

Each process relating to the method for manufacturing a polyaniline in accordance with the embodiment and materials used in each process will be described below.

In the mixing process in accordance with the embodiment, at least one of the aniline and the aniline derivatives and also a surfactant, water, water-soluble protonic acid, and a metal phosphate are added to an organic solvent immiscible with water to prepare an aniline mixed solution. In the aniline mixed solution, the aniline salt is formed by the metal phosphate and at least one of the aniline and the aniline derivatives.

Specific examples of the organic solvent immiscible with water that is used in the mixing process in accordance with the embodiment include benzene, toluene, chloroform, xylene, and ethyl acetate. Among them, toluene and xylene are especially preferred. The "organic solvent immiscible with water" may be an organic solvent with a solubility parameter (an SP value) of about 7 to 12.

The surfactant that is used in the mixing process in accordance with the embodiment is not particularly limited, and an anionic surfactant, a cationic surfactant, and a nonionic surfactant may be used. Examples of the cationic surfactant include long-chain alkyl ammonium salts and quaternary ammonium salts. Cetyltrimethyl ammonium bromide is a specific example. Examples of the anionic surfactant include long-chain alkyl sulfates, carboxylic acid salts, sulfuric acid esters and salts, and specific examples include sodium dodecylsulfate and esters and salts of alkylsulfuric acids. Examples of the nonionic surfactant include nonionic surfactants based on fatty acids and higher alcohols, specific examples including glycerin fatty acid esters and polyoxyethylene alkyl ethers.

Among them the anionic surfactant is preferred because the surfactant forms a salt with an aniline and then polymerization is performed under micelle formation.

Specific examples of the water-soluble protonic acid that is used in the mixing process in accordance with the embodiment include phosphoric acid, hydrochloric acid, sulfuric acid, and nitric acid, but phosphoric acid is preferred from the standpoint of imparting a function of a buffer solution to the polyaniline-containing solution due to coexistence of metal phosphate.

Specific examples of the metal phosphate that is used in the mixing process in accordance with the embodiment include zinc phosphate, iron phosphate, and manganese phosphate. Among them, zinc phosphate is preferably used because it has excellent antirust ability.

Specific examples of at least one of the aniline and the aniline derivatives that is used in the mixing process in accordance with the embodiment include aniline and anisidine. Aniline is preferably used because it is easy to acquire. In accordance with the embodiment, the aniline and derivatives thereof may be also used in combinations of two or more thereof.

In the mixing process in accordance with the embodiment, the sequence of adding the surfactant, water, water-soluble protonic acid, metal phosphate, and at least one of the aniline and the aniline derivatives to the organic solvent immiscible with water is not particularly limited.

In the polymerization process in accordance with the embodiment, a polymerization initiator is added to the aniline mixed solution prepared in the mixing process and at least one of the aniline and the aniline derivatives is polymerized. A polyaniline is synthesized by the polymerization reaction.

The polymerization initiator used in the polymerization process in accordance with the embodiment is not particularly limited, provided that it may induce polymerization of at least one of the aniline and the aniline derivatives. For example, ammonium persulfate, hydrogen peroxide, and ferric chloride may be used as the polymerization initiator. The polymerization initiators may be used individually or in combinations of two or more thereof. Among them, ammonium persulfate is preferred as the polymerization initiator.

The polymerization temperature and polymerization time in the polymerization process are appropriately adjusted based on the type and amount of at least one of the aniline and the aniline derivatives and the polymerization initiator.

With the method for manufacturing a polyaniline in accordance with the embodiment, a polyaniline and a polyaniline-containing solution having excellent antirust ability may be obtained. The following reason may be suggested therefore. Because at least one of the aniline and the aniline derivatives is polymerized in the presence of a metal phosphate, which is an antirust additive demonstrating a pH buffer ability and sacrificial anticorrosive action, the polyaniline and metal phosphate form a salt and the metal phosphate is caused to be present in the vicinity of the polyaniline. Further, because the metal phosphate present in the vicinity of the polyaniline inhibits the corrosion reaction at the metal surface, degradation of polyaniline caused by the corrosion reaction may be inhibited.

A typical coating material including a polyaniline and an antirust additive requires a process of preparing the polyaniline and the antirust additive separately and a subsequent process of obtaining a coating material. Accordingly, the coating material is manufactured by a complex process. However, with the method for manufacturing a polyaniline in accordance with the embodiment, a polyaniline solution containing an antirust additive may be obtained without a process of mixing the polyaniline and the antirust additive. Therefore, the coating material manufacturing process may be simplified. Furthermore, because the polyaniline in accordance with the embodiment is soluble in at least one of water and an organic solvent, the coating material may be easily formed.

The structure of the polyaniline in accordance with the embodiment obtained by using an anionic surfactant may be assumed to be represented by a General Formula (1) below.

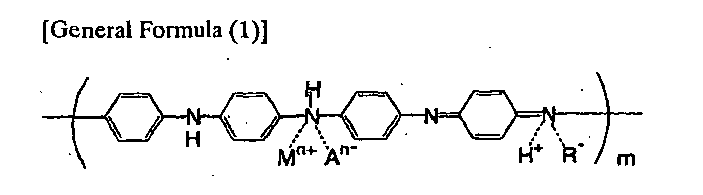

In the General Formula (1), Mⁿ⁺ represents a metal cation derived from the metal phosphate, Aⁿ⁻ represents a phosphoric acid anion derived from the metal phosphate, R⁻ represents an anionic residue of an anionic surfactant, H⁺ represent proton, and "m" represents integer of 1 or more.

The anionic surfactant is assumed to form a salt with the polyaniline. As a result, the polyaniline in accordance with the embodiment apparently has solubility in at least one of water or an organic solvent.

Because the polyaniline obtained with the method in accordance with the embodiment has excellent antirust ability, it may be advantageously used as a metal surface treatment agent or a coating material additive having an antirust function. Further, the polyaniline may be also advantageously used as an electrically conductive polymer, a substituent material for plating, an antistatic agent, and an electromagnetic wave shielding agent.

A typical polyaniline has been reported to passivate iron due to its own redox property. Further, it has also been reported that in a corrosion test in which a typical polyaniline is used as an antirust coating material, without mixing with a coating material, and coated on an iron plate and the coating surface is then damaged, a self-repair action is demonstrated due to which the damaged zone is passivated (restored). However, the antirust ability thereof seems to be insufficient for use as an antirust material for automobiles. By using a polyaniline doped with a metal phosphate obtained with the method in accordance with the embodiment, it is possible to increase dramatically the antirust ability, and such polyaniline may be also advantageously used as an antirust material for automobiles.

By using the polyaniline obtained with the method in accordance with the embodiment as an antirust material for automobiles, it is possible to increase antirust ability of joints (edge portions) of steel sheets in the automobile body. Furthermore, the progress of chipping corrosion may be inhibited. In addition, the sealing process may be reduced and simplified due to improved antirust properties of the edge portion. In addition, manual sealer application is not required in closure mono-sections such as hoods and doors and the number of manual operations is reduced. Furthermore, manual brush repair of the sealer is unnecessary, and the appearance of sealer portions is improved. As a result, the cost and process length may be reduced.

The coating material may contain the polyaniline obtained with the method in accordance with the embodiment and may also use the polyaniline-containing solution obtained with the method in accordance with the embodiment as a coating material. If necessary, a matrix resin may be added; or an antirust additive other than the metal phosphate may be added.

Examples of the matrix resin that may be used in the coating material in accordance with the embodiment include acrylic resins, epoxy resins, and polyester resins.

Examples of the antirust additives other than the metal phosphate, include powdered red earth, a cyanamide powder, zinc white, and zinc chromate.

When a matrix resin is contained in the coating material, the polyaniline obtained with the method in accordance with the embodiment is preferably added at a ratio of 1 to 4 wt.%, more preferably 2 to 3 wt.% to the matrix resin. By adding the polyaniline at a ratio of 1 to 4 wt.% to the matrix resin, it is possible to improve adhesivity of the coating film formed by the coating material.

The present invention will be described below in greater detail based on examples thereof, but the present invention is not limited to the examples.

First, Test Example 1 will be described. An aniline mixed solution was prepared by adding 3.56 g (8 mmol) of a surfactant (Aerosol OT, manufactured by Tokyo Kasei), 500 mL of phosphoric acid (1M), 3.56 g (8 mmol) of zinc phosphate, and 3.73 g (40 mmol) of aniline to 100 mL of toluene and stirring. A total of 3.56 g (8 mmol) of ammonium persulfate was added to the aniline mixed solution maintained at 0°C, and a reaction was performed for 24 h under stirring to obtain the polyaniline-containing solution.

The obtained polyaniline-containing solution was added to an acrylic coating material (Kinol 200TW, manufactured by Kansai Paint) to obtain a content ratio of the polyaniline of 2 wt.% based on a resin component in the coating material and a polyaniline-containing coating material was obtained.

An Evaluation Sample 1 was obtained by coating the polyaniline-containing coating material on a SPC steel sheet by using an applicator and drying for 20 min at 140°C. The dry thickness of the coating film of Evaluation Sample 1 was measured with an electromagnetic film thickness meter. The result was about 20 µm.

Test Example 2 will be explained below. A commercial polyaniline-containing coating material (normally dry type) manufactured by ORMECON was coated on a SPC steel sheet by using an applicator and dried over a week at room temperature to obtain Evaluation Sample 2. The dry thickness of the coating film was approximately 25 µm. The structure of polyaniline contained in the polyaniline-containing coating material manufactured by ORMECON is represented by a General Formula (2) below.

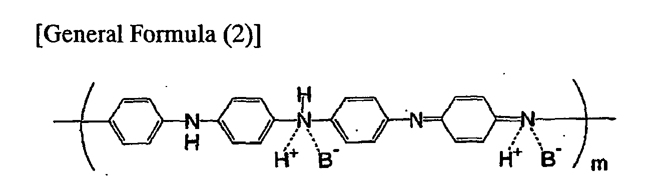

or

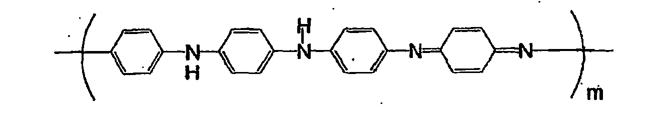

In the General Formula (2), B⁻ represents an anionic residue of a sulfonic acid, H⁺ represents proton, and "m" represents integer of 1 or more.

The evaluation will be explained below. A polyethylene cylinder was disposed on the side of each of the Evaluation Sample 1 and Evaluation Sample 2 where the coating film was formed, a 3% aqueous solution of sodium chloride was injected into the portion surrounded by the surface on which the coating film was formed and the inner surface of the cylinder and the samples were allowed to stay at 25°C. The external appearance of the coating film was observed and the alternating current impedance was measured in 30 min, 7 days, 14 days, 21 days, and 28 days thereafter.

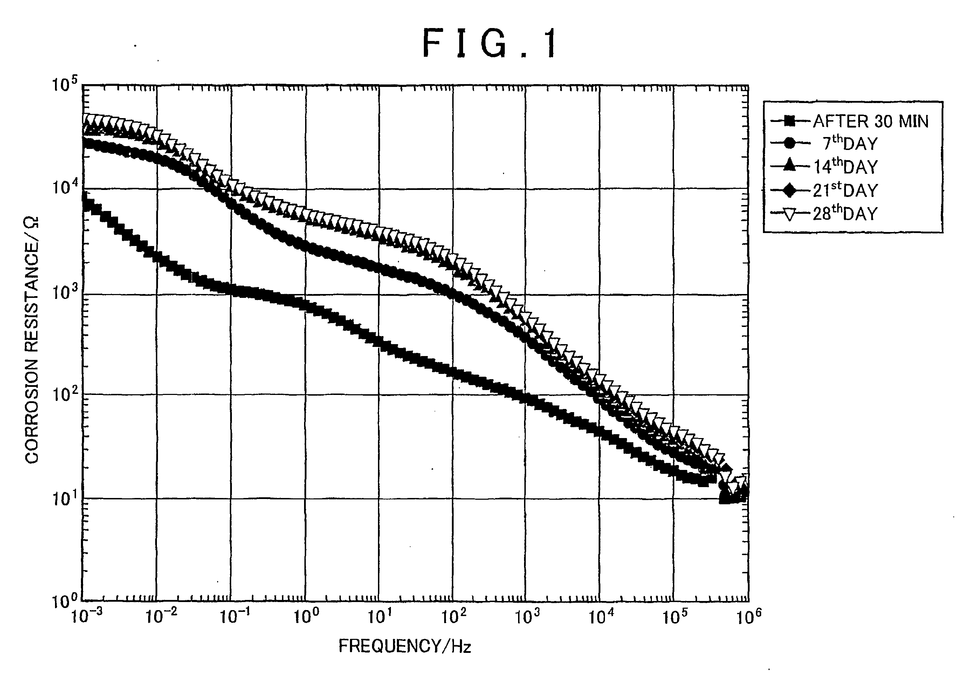

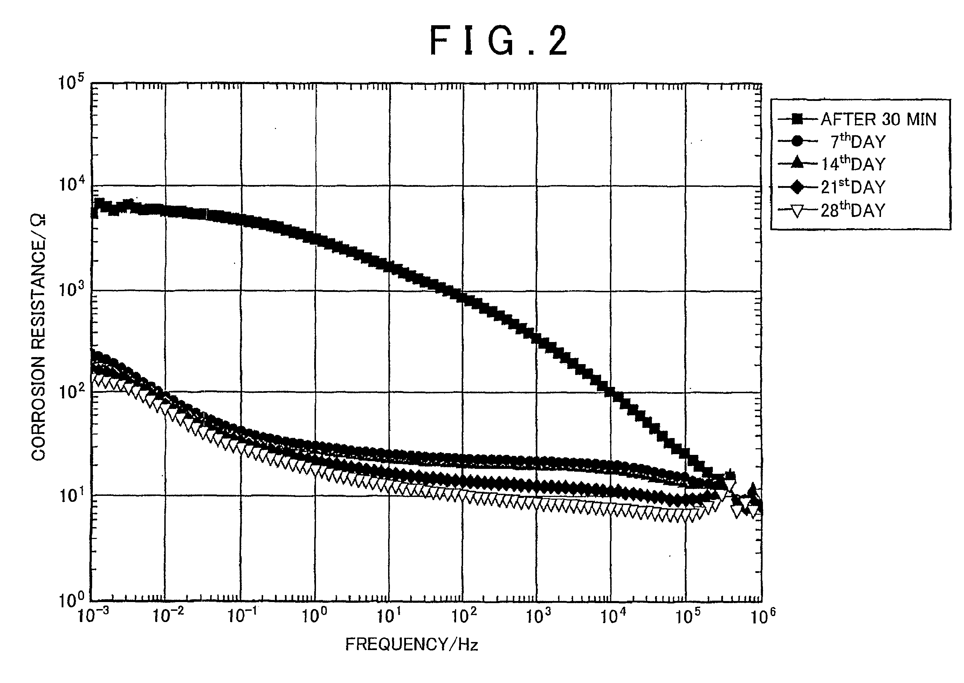

The measurement results of alternating current impedance are shown in FIG. 1 (Evaluation Sample 1) and FIG. 2 (Evaluation Sample 2). In FIGS. 1 and 2, a frequency is plotted against the abscissa and a corrosion resistance is plotted against the ordinate. The alternating current impedance was measured using PARSTAT 2273 manufactured by Prinston-Applied-Research.

In the measurement results on the alternating current impedance, the resistance of the high-frequency range indicates the resistance of aqueous solution of sodium chloride - coating film, and the resistance in the medium-to-low frequency range indicates the resistance of the coating film interface - SPC steel sheet surface. High corrosion resistance represents a state in which the corrosion progress is impeded.

FIG 1 demonstrates that in the coating film (Evaluation Sample 1) including the polyaniline in accordance with the test Example 1, the corrosion resistance in the medium-to-low frequency range rises with the increase in duration of contact with the aqueous solution of sodium chloride. On the other hand, in the coating film (Evaluation Sample 2) including the polyaniline manufactured by ORMECON, the corrosion resistance in the medium-to-low frequency range decreases with the increase in duration of contact with the aqueous solution of sodium chloride.

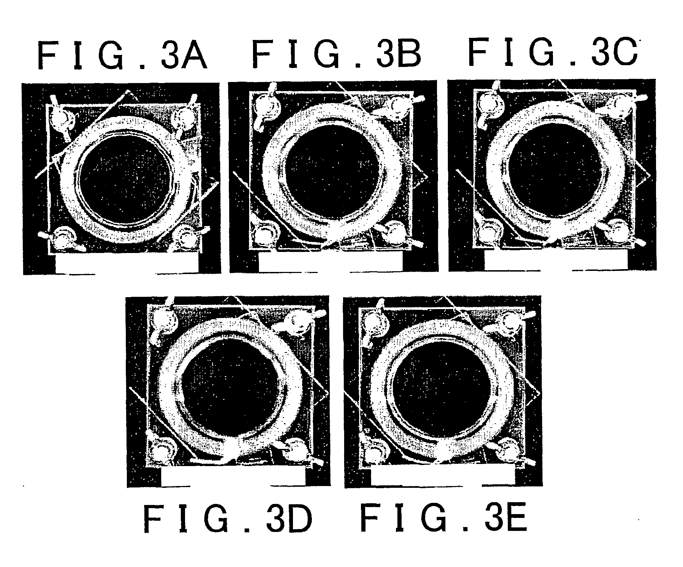

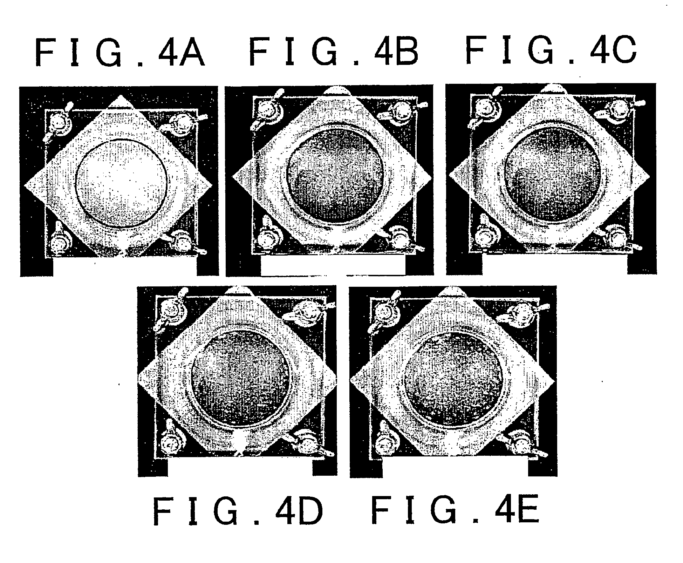

As for the observation results relating to the external appearance of the coating film, the observation results for Evaluation Sample 1 are shown in FIGS. 3A to 3E, and the evaluation results for Evaluation Sample 2 are shown in FIGS. 4A to 4E. Here, FIGS. 3A and 4A show the external appearance of the coating film after it was allowed to stay for 30 min, FIGS. 3B and 4B - after 7 days, FIGS. 3C and 4C - after 14 days, FIGS. 3D and 4D - after 21 day, and FIGS. 3E and 4E - after 28 days. In Evaluation Sample 1, no changes in the external appearance of the coating film were observed even after the film was allowed to stay for 28 days, whereas red rust appeared in Evaluation Sample 2 with time.

The results shown in FIGS. 1 to 4 indicate that doping polyaniline with zinc phosphate makes it possible to increase dramatically the antirust function.

In Test Example 3, the polyaniline-containing solution that was obtained in Test Example 1 was mixed with an acrylic coating material (Kinol 200TW) manufactured by Kansai Paint so as to obtain a content ratio of polyaniline of 1, 2, 3, 4, 5, and 10 wt.%. As a result, polyaniline-containing coating materials of 6 types with different content ratios of polyaniline were obtained. The obtained polyaniline-containing coating materials and an acrylic coating material (Kinol 200TW) manufactured by Kansai Paint were coated on an SPC steel sheet with an applicator and dried for 20 min at 140°C to produce Evaluation Sample 3 (polyaniline content ratio: 1 wt.%), Evaluation Sample 4 (polyaniline content ratio: 2 wt.%), Evaluation Sample 5 (polyaniline content ratio: 3 wt.%), Evaluation Sample 6 (polyaniline content ratio: 4 wt.%), Evaluation Sample 7 (polyaniline content ratio: 5 wt.%), Evaluation Sample 8 (polyaniline content ratio: 10 wt.%), and Evaluation Sample 9 (Kinol 200TW; polyaniline content ratio: 0 wt.%).

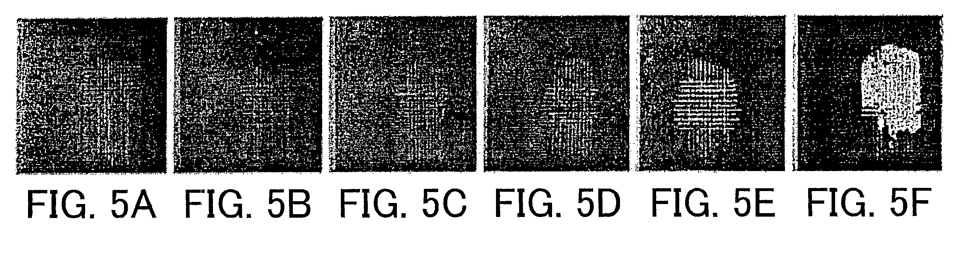

The Evaluation Samples 3 to 7 and Evaluation Sample 9 were then tested according to JIS K5400 to evaluate adhesiveness. The evaluation results are shown in FIGS. 5A to 5F. FIG. 5A shows the evaluation results obtained for Evaluation Sample 9. FIG 5B shows the evaluation results obtained for Evaluation Sample 3. FIG 5C shows the evaluation results obtained for Evaluation Sample 4. FIG 5D shows the evaluation results obtained for Evaluation Sample 5. FIG. 5E shows the evaluation results obtained for Evaluation Sample 6. FIG 5F shows the evaluation results obtained for Evaluation Sample 7. FIGS. 5A to 5F indicate that excellent adhesiveness is obtained when the content ratio of polyaniline is equal to or less than 4 wt.% based on the resin component of the coating material.

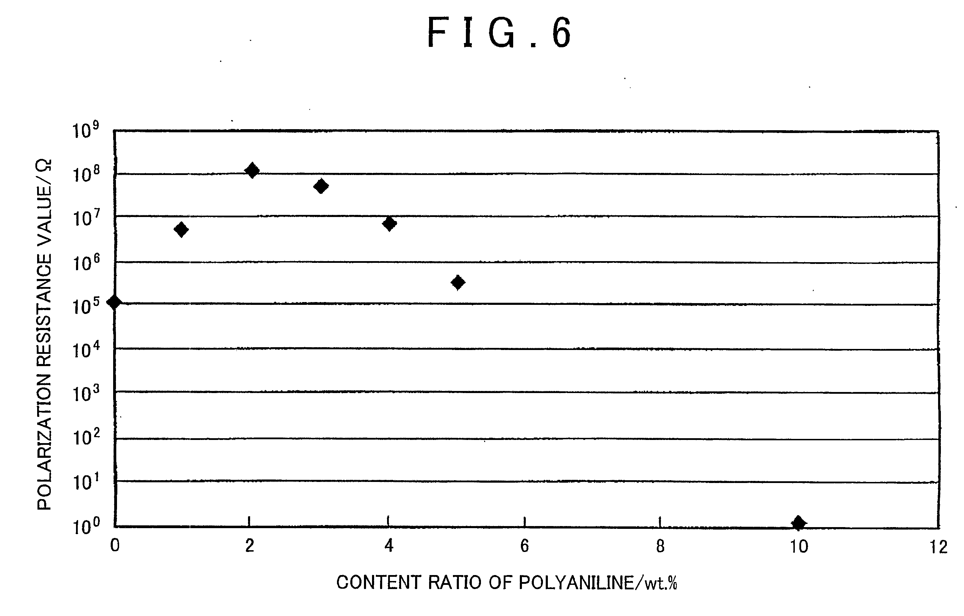

A polarization resistance value will be explained below. A resin cylinder was disposed on the side of each of the Evaluation Sample 3 to Evaluation Sample 9 where the coating film was formed, a 3% aqueous solution of sodium chloride was injected into the portion surrounded by the surface on which the coating film was formed and the inner surface of the cylinder, and the samples were allowed to stay at 25°C for 24 days. The polarization resistance value was measured using an under-film corrosion tester (HL201) manufactured by Hokuto Denko. The results obtained are shown in FIG. 6. FIG. 6 demonstrates that excellent polarization resistance value is obtained when the content ratio of polyaniline is 1 to 4 wt.% based on the resin component of the coating material.

## Claims

1. A method for manufacturing a polyaniline, comprising:
preparing an aniline mixed solution in which a metal phosphate as an antirust additive and at least one of aniline and aniline derivatives are mixed; and
polymerizing at least one of the aniline and the aniline derivatives by adding a polymerization initiator to the aniline mixed solution.

2. The method for manufacturing a polyaniline according to claim 1, wherein the aniline mixed solution is prepared by adding the metal phosphate and at least one of the aniline and the aniline derivatives to an organic solvent immiscible with water.

3. The method for manufacturing a polyaniline according to claim 2, wherein the aniline mixed solution is prepared by adding a surfactant, water, and a water-soluble protonic acid to the organic solvent immiscible with water.

4. The method for manufacturing a polyaniline according to any one of claims 1 to 3, wherein the aniline mixed solution is prepared by adding a surfactant, water, a water-soluble protonic acid, a metal phosphate, and at least one of aniline and aniline derivatives to an organic solvent immiscible with water.

5. The method for manufacturing a polyaniline according to claim 3 or 4, wherein the water-soluble protonic acid is one of phosphoric acid, hydrochloric acid, sulfuric acid, and nitric acid.

6. The method for manufacturing a polyaniline according to claim 3 or 4, wherein the water-soluble protonic acid is phosphoric acid.

7. The method for manufacturing a polyaniline according to any one of claims 1 to 6, wherein the metal phosphate is one of zinc phosphate, iron phosphate, and manganese phosphate.

8. The method for manufacturing a polyaniline according to any one of claims 1 to 6, wherein the metal phosphate is zinc phosphate.

9. The method for manufacturing a polyaniline according to any one of claims 1 to 8, wherein the polymerization initiator is one of ammonium persulfate, hydrogen peroxide, and ferric chloride.

10. The method for manufacturing a polyaniline according to any one of claims 1 to 8, wherein the polymerization initiator is ammonium persulfate.

11. The method for manufacturing a polyaniline according to any one of claims 3 to 10, wherein the surfactant is one of an anionic surfactant, a cationic surfactant, and a nonionic surfactant.

12. The method for manufacturing a polyaniline according to any one of claims 2 to 11, wherein the organic solvent immiscible with water has a solubility parameter of 7 to 12.

13. The method for manufacturing a polyaniline according to any one of claims 2 to 11, wherein the organic solvent immiscible with water is one of benzene, toluene, chloroform, xylene, and ethyl acetate.

## Patentansprüche

1. Verfahren zur Herstellung eines Polyanilins, umfassend:
Herstellen einer Anilinmischlösung, in der ein Metallphosphat als ein Rostschutzadditiv und mindestens eines von Anilin und Anilinderivaten vermischt vorliegen; und
Polymerisieren von zumindest einem von dem Anilin und den Anilinderivaten durch Zugeben eines Polymerisationsinitiators zu der Anilinmischlösung.

2. Verfahren zur Herstellung eines Polyanilins nach Anspruch 1, wobei die Anilinmischlösung hergestellt wird durch Zugeben des Metallphosphats und mindestens einem von dem Anilin und den Anilinderivaten zu einem organischen Lösungsmittel, das nicht mit Wasser mischbar ist.

3. Verfahren zur Herstellung eines Polyanilins nach Anspruch 2, wobei die Anilinmischlösung hergestellt wird durch Zugeben eines Tensids, Wasser und einer wasserlöslichen Protonensäure zu dem organischen Lösungsmittel, das nicht mit Wasser mischbar ist.

4. Verfahren zur Herstellung eines Polyanilins nach einem der Ansprüche 1 bis 3, wobei die Anilinmischlösung hergestellt wird durch Zugeben eines Tensids, Wasser, einer wasserlöslichen Protonensäure, eines Metallphosphats und mindestens einem von Anilin und Anilinderivaten zu einem organischen Lösungsmittel, das nicht mit Wasser mischbar ist.

5. Verfahren zur Herstellung eines Polyanilins nach Anspruch 3 oder 4, wobei die wasserlösliche Protonensäure eine von Phosphorsäure, Chlorwasserstoffsäure, Schwefelsäure und Salpetersäure ist.

6. Verfahren zur Herstellung eines Polyanilins nach Anspruch 3 oder 4, wobei die wasserlösliche Protonensäure Phosphorsäure ist.

7. Verfahren zur Herstellung eines Polyanilins nach einem der Ansprüche 1 bis 6, wobei das Metallphosphat eines von Zinkphosphat, Eisenphosphat und Manganphosphat ist.

8. Verfahren zur Herstellung eines Polyanilins nach einem der Ansprüche 1 bis 6, wobei das Metallphosphat Zinkphosphat ist.

9. Verfahren zur Herstellung eines Polyanilins nach einem der Ansprüche 1 bis 8, wobei der Polymerisationsinitiator einer von Ammoniumpersulfat, Wasserstoffperoxid und Eisenchlorid ist.

10. Verfahren zur Herstellung eines Polyanilins nach einem der Ansprüche 1 bis 8, wobei der Polymerisationsinitiator Ammoniumpersulfat ist.

11. Verfahren zur Herstellung eines Polyanilins nach einem der Ansprüche 3 bis 10, wobei das Tensid eines von einem anionischen Tensid, einem kationischen Tensid und einem nichtionischen Tensid ist.

12. Verfahren zur Herstellung eines Polyanilins nach einem der Ansprüche 2 bis 11, wobei das organische Lösungsmittel, das nicht mit Wasser mischbar ist, einen Löslichkeitsparameter von 7 bis 12 aufweist.

13. Verfahren zur Herstellung eines Polyanilins nach einem der Ansprüche 2 bis 11, wobei das organische Lösungsmittel, das nicht mit Wasser mischbar ist, eines von Benzol, Toluol, Chloroform, Xylol und Ethylacetat ist.

## Revendications

1. Procédé de fabrication d'une polyaniline, comprenant le fait :
de préparer une solution mélangée à base d'aniline dans laquelle un phosphate métallique à titre d'additif antirouille et au moins l'un de l'aniline et de dérivés de l'aniline sont mélangés ; et
de polymériser au moins l'un de l'aniline et des dérivés de l'aniline en ajoutant un initiateur de polymérisation à la solution mélangée à base d'aniline.

2. Procédé de fabrication d'une polyaniline selon la revendication 1, dans lequel la solution mélangée à base d'aniline est préparée en ajoutant le phosphate métallique et au moins l'un de l'aniline et des dérivés d'aniline à un solvant organique non miscible dans l'eau.

3. Procédé de fabrication d'une polyaniline selon la revendication 2, dans lequel la solution mélangée à base d'aniline est préparée en ajoutant un agent tensio-actif, de l'eau, et un acide protonique soluble dans l'eau au solvant non miscible dans l'eau.

4. Procédé de fabrication d'une polyaniline selon l'une quelconque des revendications 1 à 3, dans lequel la solution mélangée à base d'aniline est préparée en ajoutant un agent tensio-actif, de l'eau, un acide protonique soluble dans l'eau, un phosphate métallique, et au moins l'un d'une aniline et de dérivés d'aniline à un solvant organique non miscible dans l'eau.

5. Procédé de fabrication d'une polyaniline selon la revendication 3 ou 4, dans lequel l'acide protonique soluble dans l'eau est l'un de l'acide phosphorique, de l'acide hydrochlorique, de l'acide sulfurique et de l'acide nitrique.

6. Procédé de fabrication d'une polyaniline selon la revendication 3 ou 4, dans lequel l'acide protonique soluble dans l'eau est l'acide phosphorique.

7. Procédé de fabrication d'une polyaniline selon l'une quelconque des revendications 1 à 6, dans lequel le phosphate métallique est l'un du phosphate de zinc, du phosphate de fer, et du phosphate de manganèse.

8. Procédé de fabrication d'une polyaniline selon l'une quelconque des revendications 1 à 6, dans lequel le phosphate métallique est le phosphate de zinc.

9. Procédé de fabrication d'une polyaniline selon l'une quelconque des revendications 1 à 8, dans lequel l'initiateur de polymérisation est l'un du persulfate d'ammonium, du peroxyde d'hydrogène et du chlorure ferrique.

10. Procédé de fabrication d'une polyaniline selon l'une quelconque des revendications 1 à 8, dans lequel l'initiateur de polymérisation est le persulfate d'ammonium.

11. Procédé de fabrication d'une polyaniline selon l'une quelconque des revendications 3 à 10, dans lequel le surfactant est l'un d'un surfactant anionique, d'un surfactant cationique, et d'un surfactant non ionique.

12. Procédé de fabrication d'une polyaniline selon l'une quelconque des revendications 2 à 11, dans lequel le solvant organique non miscible dans l'eau présente un paramètre de solubilité de 7 à 12.

13. Procédé de fabrication d'une polyaniline selon l'une quelconque des revendications 2 à 11, dans lequel le solvant organique non miscible dans l'eau est l'un du benzène, du toluène, du chloroforme, du xylène et de l'acétate d'éthyle.
